# EUROPÄISCHE PATENTSCHRIFT

(11) **EP 1 300 740 B1**
(45) Veröffentlichungstag und Bekanntmachung des Hinweises auf die Patenterteilung: **04.05.2011**
(21) Anmeldenummer: 02020611.6
(22) Anmeldetag: 13.09.2002
(51) Int. Cl.: G05B 19/4093, G05B 19/408

(54) **Verfahren und Vorrichtung zum Erstellen oder Ändern von NC-Programmen**
Process and apparatus to establish or amend nc-programs
Procédé et appareil pour réaliser ou changer des programmes de commande numérique

(30) Priorität: 04.10.2001 DE 10149147
(43) Veröffentlichungstag der Anmeldung: 09.04.2003
(73) Patentinhaber: Dr. Johannes Heidenhain GmbH, 83292 Traunreut (DE)
(72) Erfinder: Rutkowski, Christian, 83278 Traunstein (DE)

(56) Entgegenhaltungen:
- EP-A- 0 336 975
- EP-A- 0 643 342
- DE-A- 19 707 107
- US-A- 5 980 078
- US-B1- 6 226 787
- "GRAPHISCHE UNTERSTUTZUNG FUR DIE NC-PROGRAMMIERUNG" ZWF ZEITSCHRIFT FUR WIRTSCHAFTLICHE FERTIGUNG UND AUTOMATISIERUNG, CARL HANSER VERLAG. MUNCHEN, DE, Bd. 85, Nr. 12, 1. Dezember 1990 (1990-12-01), Seite 635 XP000110649 ISSN: 0947-0085

## Beschreibung

Die Erfindung betrifft ein Verfahren zum Erstellen oder Ändern von NC-Programmen nach dem Oberbegriff des Anspruches 1. Die Erfindung betrifft weiter eine Vorrichtung zum Erstellen oder Ändern von NC-Programmen nach dem Oberbegriff des Anspruches 9.

In modernen Werkzeugmaschinen werden Numerische Steuerungen verwendet, um Werkstücke anhand eines NC-Programms zu bearbeiten. Diese NC-Programme werden dabei von der Numerischen Steuerung abgearbeitet, die ihrerseits die Werkzeugmaschine steuert und die nötigen Bearbeitungsschritte auslöst. Dies können etwa Schritte wie die Wahl des Werkzeuges, die Führung des Werkzeuges auf einer Werkzeugbahn oder das Ein- und Ausschalten von Kühlmitteln sein. Da Werkzeugmaschinen immer leistungsfähiger werden, wachsen auch die NC-Programme immer weiter an. Die Erstellung oder Änderung eines NC-Programms ist daher ein wichtiger und immer aufwendigerer Schritt bei der Bearbeitung von Werkstücken mit numerisch gesteuerten Werkzeugmaschinen. Es ist daher wichtig, den Ersteller eines solchen NC-Programms bestmöglich zu unterstützen, damit dieser auch große und komplexe Programmieraufgaben effizient und fehlerfrei lösen kann.

In der EP 0 643 342 B1 wird daher ein Verfahren zur Erstellung und/oder Änderung von NC-Programmen vorgeschlagen, mit dem eine gegliederte Darstellung eines NC-Programms möglich ist. Hierzu werden vom Programmierer Gruppen von Syntaxelementen zu NC-Blöcken zusammengefaßt und mit Kommentaren versehen. In einer geteilten Bildschirmanzeige wird dann eine Übersicht des NC-Programms anhand der Kommentare angezeigt, und gleichzeitig das vollständige NC-Programm. Die Darstellung des NC-Programms selbst, in dem ja letztlich die Eingabe oder die Änderung des NC-Programms erfolgt, ist dabei aber nicht weiter strukturiert, und das Eingeben der Kommentare erhöht den Aufwand bei der Programmerstellung oder Programmänderung. Anhand der Kommentare läßt sich zwar ein Oberblick über die Struktur des NC-Programms verschaffen, Details erschließen sich aber nicht.

Es ist daher Aufgabe der Erfindung, ein Verfahren zum Erstellen oder Ändern von NC-Programmen anzugeben, das eine übersichtliche Darstellung des NC-Programms erlaubt und so dessen einfache Erstellung oder Änderung ermöglicht.

Diese Aufgabe wird gelöst durch ein Verfahren mit den kennzeichnenden Merkmalen des Anspruches 1. Vorteilhafte Details des Verfahrens ergeben sich aus den von Anspruch 1 abhängigen Ansprüchen.

Eine weitere Aufgabe der Erfindung ist es, eine Vorrichtung anzugeben, mit der eine übersichtliche Darstellung eines NC-Programms erzielt werden kann und die so dessen einfache Erstellung oder Änderung ermöglicht.

Diese Aufgabe wird gelöst durch eine Vorrichtung mit den kennzeichnenden Merkmalen des Anspruches 9. Vorteilhafte Ausführungsformen der Vorrichtung ergeben sich aus den von Anspruch 9 abhängigen Ansprüchen.

Es wird nun vorgeschlagen, zum Erstellen oder Ändern eines NC-Programms auf einer graphischen Benutzeroberfläche eine Übersichtsanzeige des NC-Programms anhand von NC-Blöcken darzustellen, die jeweils aus einem oder mehreren Syntaxelementen bestehen. Dabei werden mit jedem NC-Block lediglich eine Teilmenge seiner Syntaxelemente dargestellt. Es ist dem Programmierer damit leicht möglich, einen Überblick über das bearbeitete NC-Programm zu bekommen. Vorteilhafterweise ist für jeden NC-Block konfigurierbar, welche seiner Syntaxelemente als wichtig anzusehen sind und damit der in der Übersichtsanzeige darzustellenden Teilmenge angehören. Dies erlaubt eine Anpassung des Verfahrens zum Erstellen oder Ändern eines NC-Programms an unterschiedlichste Gegebenheiten.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine graphische Benutzeroberfläche einer Numerischen Steuerung mit einer Übersichtsanzeige,
- Figur 2: eine weitere graphische Benutzeroberfläche einer Numerischen Steuerung mit einer zur Auswahl gestellten Menge an Werkzeugen,
- Figur 3: eine weitere graphische Benutzeroberfläche einer Numerischen Steuerung mit einer graphischen Darstellung einer Kontur, und
- Figur 4: ein Verfahren zum Erstellen oder Ändern von NC-Programmen.

Ein NC-Programm für eine Numerische Steuerung einer Werkzeugmaschine läßt sich in NC-Blöcke gliedern, die ein oder mehrere Syntaxelemente enthalten. So könnten beispielsweise in einem NC-Block zur Definition eines zu bearbeitenden Rohteiles Syntaxelemente vorkommen, die eine Definition des Materials des Rohteiles erlauben, eine Ausrichtung des Rohteiles bezüglich einer Maschinenachse, sowie die Koordinaten der vorderen rechten und hinteren linken Ecke eines Quaders, der das Rohteil vollständig enthält. Ein weiteres Beispiel für einen NC-Block ist die Auswahl eines Werkzeuges.

Hier sind etwa Syntaxelemente nötig zum Bestimmen des eigentlichen Werkzeuges, der dem Werkzeug zugeordneten Spindelachse, der Spindeldrehzahl und des Werkzeugvorschubes. In der Programmierung nach DIN 66025 entspricht ein Satz dem NC-Block, die Wörter eines Satzes entsprechen den Syntaxelementen.

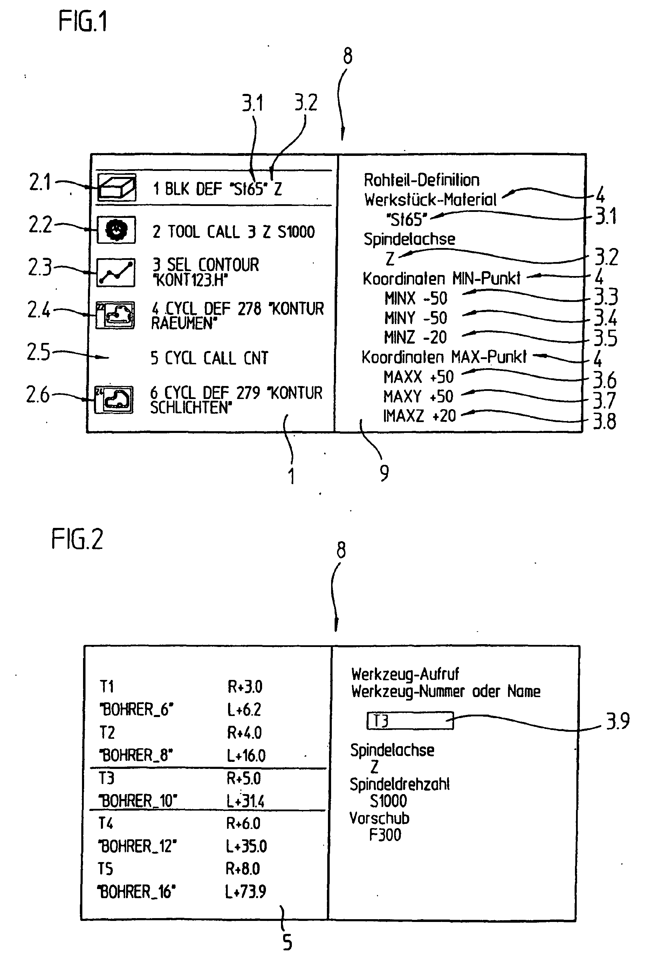

Wie in Figur 1 dargestellt, läßt sich auf einer graphischen Benutzeroberfläche 8 einer Numerischen Steuerung ein NC-Programm in einer Übersichtsanzeige 1 darstellen, indem eine Liste von NC-Blöcken 2.1 - 2.6 angezeigt wird, die das NC-Programm oder einen Teil davon bilden. Ohne einen Blick auf eine vollständige Liste der Syntaxelemente 3.1 - 3.8 zu werfen, kann so ein Überblick über das NC-Programm gewonnen werden. Um aber den Inhalt jedes NC-Blockes 2.1 - 2.6 besser erfassen zu können, wird erfindungsgemäß schon in der Übersichtsanzeige 1 eine Teilmenge aller Syntaxelemente 3.1 - 3.8 zu jedem NC-Block 2.1 - 2.6 angezeigt. So werden in Figur 1 zum NC-Block 2.1 die Syntaxelemente 3.1 und 3.2 als Teilmenge aller Syntaxelemente 3.1 - 3.8 des NC-Blockes 2.1 in der Übersichtsanzeige 1 angezeigt.

Da moderne Numerische Steuerungen an sehr unterschiedlichen Werkzeugmaschinen und zu sehr unterschiedlichen Zwecken eingesetzt werden, sollte konfigurierbar sein, welche Teilmenge der Syntaxelemente 3.1 - 3.8 eines NC-Blocks 2.1 - 2.6 schon in der Übersichtsanzeige 1 dargestellt wird. So wird in einem NC-Block 2.2 zur Auswahl eines Werkzeuges das Schlichtaufmaß eines Werkzeuges durchaus eine wichtige Rolle spielen, wenn es sich bei der gesteuerten Werkzeugmaschine um eine Fräsmaschine handelt, während das Schlichtaufmaß für eine Bohrmaschine keine Bedeutung hat. Ebenso ist die Angabe der Spindelachse als Syntaxelement 3.2 in einem NC-Block 2.1 nur dann wichtig, wenn die gesteuerte Werkzeugmaschine über mehr als eine Spindelachse verfügt.

Die Konfiguration der mit den NC-Blöcken 2.1 - 2.6 anzuzeigenden Teilmenge der Syntaxelemente 3.1 - 3.8 kann beispielsweise mittels einer änderbaren Tabelle erfolgen, in der für jeden NC-Block 2.1 - 2.6 alle Syntaxelemente 3.1 - 3.8 aufgelistet sind, zusammen mit einer Information, ob eine Anzeige in der Übersichtsanzeige 1 jeweils erfolgen soll.

Wird nun ein in der Übersichtsanzeige 1 dargestellter NC-Block 2.1 - 2.6 ausgewählt, so werden in einer Detailanzeige 9 alle Syntaxelemente 3.1 - 3.8 des NC-Blocks 2.1 - 2.6 dargestellt. Dies kann besonders übersichtlich dadurch geschehen, daß auf der grafischen Benutzeroberfläche 8 ein geteilter Bildschirmbereich zum Einsatz kommt, wie es in Figur 1 dargestellt ist. Dabei wird die Übersichtsanzeige 1 und die Detailanzeige 9 gleichzeitig dargestellt. Natürlich kann auch ein eigenes Fenster zur Darstellung aller Syntaxelemente 3.1 - 3.8 eines NC-Blockes 2.1 - 2.6 geöffnet werden, oder es kann die Übersichtsanzeige 1 ersetzt werden durch die Detailanzeige 9.

Bei der Darstellung aller Syntaxelemente 3.1 - 3.8 eines NC-Blocks 2.1 - 2.6 in der Detailanzeige 9 ist es der Übersicht dienlich, wenn gleichartige Syntaxelemente 3.1 - 3.8 unter einer erklärenden Überschrift 4 zusammengefaßt werden. Die eigentlichen Syntaxelemente 3.1 - 3.8 können dabei optisch hervorgehoben werden, um dem Programmierer schnell zu zeigen, an welchen Stellen Eingaben oder Änderungen möglich sind. In Figur 1 erkennt man beispielsweise eine Einrückung der Syntaxelemente 3.1 - 3.8 relativ zu den Überschriften 4. Aber auch eine farbliche Hervorhebung oder eine Unterstreichung sind weitere Möglichkeiten von vielen, die ein Hervorheben der Syntaxelemente 3.1 - 3.8 in der Detailanzeige 9 erlauben.

Figur 2 zeigt eine weitere Möglichkeit, den Programmierer bei der Erstellung eines NC-Programms zu unterstützen. Bei der Eingabe eines konkreten Wertes für ein Syntaxelement 3.9, bei der eine Auswahl aus einer vorgegebenen Menge 5 zu treffen ist, wird die vorgegebene Menge 5 auf der graphischen Benutzeroberfläche 8 angezeigt. So kann beispielsweise bei der Eingabe eines Werkzeuges in einem NC-Block 2.2 zum Aufruf eines Werkzeugwechsels (TOOL CALL) eine Liste aller zur Verfügung stehenden Werkzeuge angeboten werden. Wie in Figur 2 dargestellt, kann dazu die Übersichtsanzeige 1 durch die Liste aller zur Verfügung stehenden Werkzeuge ersetzt werden, bis eine Auswahl getroffen wurde.

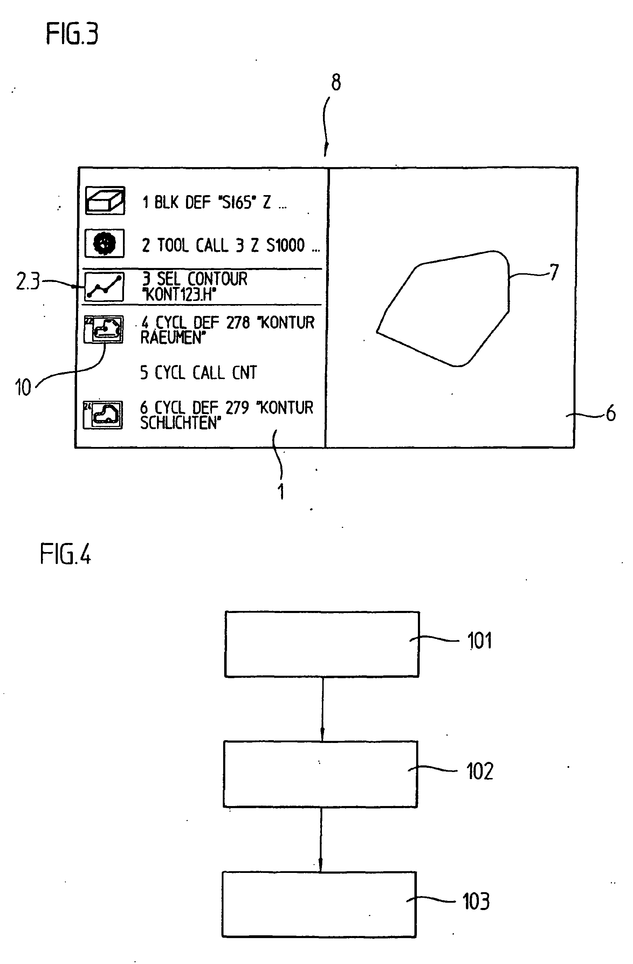

In Figur 3 ist dargestellt, wie nach der Auswahl eines NC-Blockes 2.3 zur Beschreibung einer Kontur (SEL CONTOUR) eine graphische Darstellung 6 der Kontur 7 angezeigt wird. Diese graphische Darstellung 6 kann beispielsweise statt der Detailanzeige 9 angezeigt werden, oder in einem weiteren Bereich der graphischen Benutzeroberfläche 8. Da es möglich ist, in einem NC-Block 2.3 ein Unterprogramm aufzurufen, das eine Kontur 7 beschreibt, ist in Figur 3 mit dem NC-Block 2.3 als einziges Syntaxelement der Name des aufgerufenen Unterprogramms (KONT123.H) dargestellt.

Ebenso kann in nicht dargestellter Weise während der Eingabe der Syntaxelemente 3.1 - 3.8 eines NC-Blocks 2.3 zur direkten Beschreibung einer Kontur 7 (also ohne Aufruf eines Unterprogramms) die Übersichtsanzeige 1 durch die graphische Darstellung 6 ersetzt werden, um die Wirkung einzelner Syntaxelemente 3.1 - 3.8 auf die Kontur 7 erkennen zu können.

Als letzte Maßnahme zur Unterstützung bei der Erstellung oder Änderung eines NC-Programms sei noch erwähnt, daß in der Übersichtsanzeige 1 den NC-Blöcken 2.1 - 2.6 Piktogramme 10 beigefügt werden können. Diese Piktogramme 10 sollten möglichst die Funktion des jeweiligen NC-Blocks 2.1 - 2.6 beschreiben und können beispielsweise den Piktogrammen entsprechen, die schon beim Aufrufen eines neuen NC-Blocks 2.1 - 2.6 mittels eines graphisch gestalteten Softkeys der graphischen Benutzeroberfläche 8 verwendet werden. Um bei Bedarf mehr Platz für die Anzeige wichtiger Syntaxelemente 3.1 - 3.8 zu jedem NC-Block 2.1 - 2.6 zu haben, sollte die Darstellung der Piktogramme 10 jedoch abschaltbar sein.

Figur 4 faßt noch einmal die wichtigsten Schritte eines Verfahrens zum Erstellen oder Ändern von NC-Programmen zusammen, die zu einer übersichtlichen Darstellung eines NC-Programms führen und somit dessen einfache Erstellung oder Änderung erlauben.

In einem Schritt 101 wird konfiguriert, welche Teilmenge aller Syntaxelemente 3.1 - 3.8 eines jeden NC-Blocks 2.1 - 2.6 schon in der Übersichtsanzeige 1 angezeigt werden soll. Durch eine Wiederholung dieses Schrittes kann das Verfahren zum Erstellen oder Ändern von NC-Programmen an unterschiedlichste Bedingungen angepaßt werden.

In einem Schritt 102 wird in der Übersichtsanzeige 1 eine Liste von NC-Blöcken 2.1 - 2.6 angezeigt, wobei zu jedem NC-Block lediglich die in Schritt 101 konfigurierte Teilmenge seiner Syntaxelemente 3.1 - 3.8 angezeigt wird.

In einem Schritt 103 wird schließlich einer der in der Übersichtsanzeige 1 dargestellten NC-Blöcke 2.1 - 2.6 ausgewählt und eine Detailanzeige 9 mit allen Syntaxelementen 3.1 - 3.8 des ausgewählten NC-Blockes 2.1 - 2.6 angezeigt.

## Patentansprüche

1. Verfahren zum Erstellen oder Ändern von NC-Programmen, bei dem in einem Schritt (102) in einer Übersichtsanzeige (1) wenigstens ein NC-Block (2.1 - 2.6) des NC-Programms dargestellt wird, und bei dem der NC-Block (2.1 - 2.6) mehrere Syntaxelemente (3.1 - 3.8) enthält, wobei in der Übersichtsanzeige (1) mit dem wenigstens einen NC-Block (2.1 - 2.6) lediglich eine Teilmenge seiner Syntaxelemente (3.1 - 3.8) angezeigt wird, **dadurch gekennzeichnet, daß** in einem Schritt (101) konfiguriert wird, welche Teilmenge der Syntaxelemente (3.1 - 3.8) eines NC-Blocks (2.1 - 2.6) schon in der Übersichtsanzeige (1) dargestellt wird, und dass in einem Schritt (103) ein NC-Block (2.1 - 2.6) ausgewählt wird und alle Syntaxelemente (3.1 - 3.8) dieses NC-Blocks (2.1 - 2.6) in einer Detailanzeige (9) angezeigt werden.

2. Verfahren nach Anspruch 1, **dadurch gekennzeichnet, daß** bei der Anzeige aller Syntaxelemente (3.1 - 3.8) des NC-Blocks (2.1 - 2.6) in der Detailanzeige (9) gleichartige Syntaxelemente (3.1 - 3.8) unter einer Überschrift (4) zusammengefaßt werden.

3. Verfahren nach Anspruch 1 oder 2, **dadurch gekennzeichnet, daß** veränderbare oder eingebbare Teile der Syntaxelemente (3.1 - 3.8) in der Detailanzeige (9) optisch hervorgehoben werden.

4. Verfahren nach einem der vorhergehenden Ansprüche, **dadurch gekennzeichnet, daß** während der Eingabe eines Syntaxelementes (3.9), für das eine Auswahl aus einer vorgegebenen Menge (5) zu treffen ist, eine Anzeige der vorgegebenen Menge (5) erfolgt.

5. Verfahren nach einem der vorhergehenden Ansprüche, **dadurch gekennzeichnet, daß** nach der Auswahl eines konturbeschreibenden NC-Blocks (2.3) eine graphische Darstellung (6) der im konturbeschreibenden NC-Block (2.3) beschriebenen Kontur (7) angezeigt wird.

6. Verfahren nach einem der vorhergehenden Ansprüche, **dadurch gekennzeichnet, daß** NC-Blöcke (2.1 - 2.6) in der Übersichtsanzeige (1) abschaltbar mit einem Piktogramm (10) dargestellt werden.

7. Verfahren nach einem der vorhergehenden Ansprüche, **dadurch gekennzeichnet, dass** die Übersichtsanzeige (1) und die Detailanzeige (9) gleichzeitig in einem geteilten Bildschirmbereich einer Benutzeroberfläche (8) dargestellt werden.

8. Vorrichtung mit Mitteln zur Durchführung eines Verfahrens nach einem der Ansprüche 1-7.

## Claims

1. A method for creating or changing NC programs, in the case of which at least one NC block (2.1-2.6) of the NC program is displayed in an overview display (1) in a step (102) and in the case of which the NC block (2.1-2.6) includes a plurality of syntax elements (3.1-3.8), wherein only a partial quantity of its syntax elements (3.1-3.8) is displayed in the overview display (1) with the at least one NC block (2.1-2.6), **characterized in that** it is configured in a step (101), which partial quantity of the syntax elements (3.1-3.8) of an NC block (2.1-2.6) is already displayed in the overview display (1) and that one NC block (2.1-2.6) is chosen in a step (103) and that all syntax elements (3.1-3.8) of this NC block (2.1-2.6) are displayed in a detail display (9).

2. The method according to claim 1, **characterized in that** similar syntax element (3.1-3.8) are combined in the detail display (9) under one heading (4) in response to the display of all syntax elements (3.1-3.8) of the NC block (2.1-2.6).

3. The method according to claim 1 or 2, **characterized in that** portions of the syntax elements (3.1-3.8), which can be changed or input, are optically emphasized in the detail display (9).

4. The method according to one of the preceding claims, **characterized in that** a display of the predetermined quantity (5) takes place during the input of a syntax element (3.9), for which a selection from a predetermined quantity (5) must be made.

5. The method according to one of the preceding claims, **characterized in that** a graphic illustration (6) of the contour (7), which is described in the NC block (2.3), which describes a contour, is displayed after the selection of an NC block (2.3), which describes a contour.

6. The method according to one of the preceding claims, **characterized in that** NC blocks (2.1-2.6) are illustrated in the overview display (1) by means of a pictogram (10) as being capable of being turned off.

7. The method according to one of the preceding claims, **characterized in that** the overview display (1) and the detail display (9) are illustrated simultaneously in a divided screen area of a user surface (8).

8. A device comprising means for carrying out a method according to one of claims 1-7.

## Revendications

1. Procédé pour l'établissement ou la modification de programmes NC, dans lequel au moins un bloc NC (2.1 - 2.6) du programme NC est représenté dans une étape (102) sur un affichage d'ensemble (1), et dans lequel le bloc NC (2.1 - 2.6) contient plusieurs éléments de syntaxe (3.1 - 3.8), où une quantité partielle seulement des éléments de syntaxe (3.1 - 3.8) est affichée avec le bloc NC (2.1 - 2.6) dans l'affichage d'ensemble (1), **caractérisé en ce que** dans une étape (101), la quantité partielle des éléments de syntaxe (3.1 - 3.8) d'un bloc NC (2.1 - 2.6) déjà représentée dans l'affichage d'ensemble (1) est configurée, et **en ce que** dans une étape (103), un bloc NC (2.1 - 2.6) est sélectionné, et tous les éléments de syntaxe (3.1 - 3.8) de ce bloc NC (2.1 - 2.6) sont affichés dans un affichage détaillé (9).

2. Procédé selon la revendication 1, **caractérisé en ce que** lors de l'affichage de tous les éléments de syntaxe (3.1 - 3.8) du bloc NC (2.1 - 2.6) dans l'affichage détaillé (9), les éléments de syntaxe (3.1 - 3.8) du même genre sont rassemblés sous un titre (4).

3. Procédé selon la revendication 1 ou 2, **caractérisé en ce que** les quantités partielles des éléments de syntaxe (3.1 - 3.8) qui peuvent être modifiées ou saisies sont mises en évidence visuellement dans l'affichage détaillé (9).

4. Procédé selon l'une des revendications précédentes, **caractérisé en ce que** pendant la saisie d'un élément de syntaxe (3.9), pour lequel une sélection parmi la quantité prédéfinie (5) doit être effectuée, la quantité prédéfinie (5) est affichée.

5. Procédé selon l'une des revendications précédentes, **caractérisé en ce qu'**après la sélection d'un bloc NC (2.3) décrivant le contour, une représentation graphique (6) du contour décrit (7) dans le bloc NC (2.3) décrivant le contour est affichée.

6. Procédé selon l'une des revendications précédentes, **caractérisé en ce que** les blocs NC (2.1 - 2.6) sont représentés de façon désactivable avec un pictogramme (10) dans l'affichage d'ensemble (1).

7. Procédé selon l'une des revendications précédentes, **caractérisé en ce que** l'affichage d'ensemble (1) et l'affichage détaillé (9) sont représentés simultanément dans une zone d'écran divisée d'une interface d'utilisateur (8).

8. Dispositif avec des moyens pour l'exécution d'un procédé selon l'une des revendications 1 à 7.
